# EUROPEAN PATENT APPLICATION

(11) **EP 4 228 064 A1**
(43) Date of publication of application: **16.08.2023**
(21) Application number: 23156754.6
(22) Date of filing: 15.02.2023
(51) Int. Cl.: H01M 50/122, H01M 50/124, H01M 50/126

(54) **BATTERY PACKAGING MATERIAL**

(30) Priority: 15.02.2022 JP 2022021082; 16.01.2023 JP 2023004447
(71) Applicant: Resonac Packaging Corporation, Hikone-shi, Shiga (JP)
(72) Inventor: Kawakita, Keitaro, Hikone-shi, Shiga (JP)
(74) Representative: Hoffmann Eitle

(57) **Abstract**

Conflicting properties that a protective tape is not accidentally peeled off and can be peeled off without leaving an adhesive of the protective tape are given to a surface of a battery packaging material. The battery packaging material 1 includes a substrate layer 13, a heat-fusible resin layer 15, a barrier layer 11 arranged between the substrate layer and the heat fusible resin layer, and a substrate protective layer 20 arranged as an outermost layer on an outer side of the substrate layer 13. The substrate protective layer 20 includes a binder resin 21 and solid fine particles 22, and a content rate of the binder resin 21 in the substrate protective layer 20 is 45 mass% to 70 mass%.

## Description

### Technical Field

The present invention relates to a packaging material for a power storage device, such as, e.g., a battery or a capacitor used for a mobile device including, e.g., a smartphone and a tablet computer, or a battery or a capacitor used to store electric power for an electric vehicle, wind power generation, solar power generation, and nighttime electricity.

### Background of the Invention

In a production process of a battery, when a surface of a packaging material is damaged, the appearance of the article is impaired. In order to prevent the occurrence of poor appearance during the production process, a method is employed in which a protective tape adheres to the packaging material, and the protective tape is peeled off after completion of the production.

Although the protective tape is required to have adhesive properties to prevent the protective tape from being peeled off during the production process, in a case where it firmly adheres, the adhesive of the protective tape may remain on the packaging material after the peeling.

Further, in the packaging material in which a colored layer containing carbon black is laminated on the surface of the packaging material, the colored layer may also be peeled off together with the protective tape.

With respect to the problem of the protective tape, the adhesive residues after peeling of the protective layer have been conventionally addressed by the adhesive force of the protective tape (see Patent Document 1). Further, a technique for strengthening a colored layer has been proposed to cope with the peeling of the colored layer (see Patent Document 2).

### Prior Art Document

### Patent Document

Patent Document 1: Japanese Unexamined Patent Application Publication No. 2020-155364
Patent Document 2: Japanese Unexamined Patent Application Publication No. 2006-206805

### SUMMARY OF THE INVENTION

### Problems to be Solved by the Invention

However, the technique disclosed in Patent Document 1 is not a measure to prevent glue residues on the packaging material. Further, the technique disclosed in Patent Document 2 does not solve the problem of glue residues for the packaging material in which the outermost layer is not a colored layer containing carbon black.

### Means for Solving the Problem

In view of the above-described background technique, the present invention aims to impart conflicting properties of preventing unintentional peeling of a protective tape and enabling peeling without leaving an adhesive of the protective tape on a surface of a battery packaging material and to prevent appearance deterioration due to residues of an adhesive of the protective tape.

That is, the present invention has the configuration recited in the following items [1] to [8].
[1] A battery packaging material comprising:
   a substrate layer;
   a heat-fusible resin layer;
   a barrier layer arranged between the substrate layer and the heat-fusible resin layer; and
   a substrate protective layer arranged as an outermost layer on an outer side of the substrate layer,
   wherein the substrate protective layer includes a binder resin and solid fine particles, and
   wherein a content rate of the binder resin in the substrate protective layer is 45 mass% to 70 mass%.
[2] The battery packaging material as recited in the above-described Item [1],
   wherein the binder resin is at least one type of a resin selected from the group consisting of an acryl-based resin, a urethane-based resin, a polyolefin-based resin, a phenoxy-based resin, and a polyester-based resin.
[3] The battery packaging material as recited in the above-described Item [1] or [2],
   wherein the solid fine particles are composed of inorganic fine particles and organic fine particles, and a content rate of the solid fine particles in the substrate protective layer is 30 mass% to 55 mass%.
[4] The battery packaging material as recited in the above-described Item [3],
   wherein a content rate of the solid fine particles having an average particle diameter of 5 um to 20 um in the substrate protective layer is 1 mass% to 20 mass%.
[5] The battery packaging material as recited in any one of the above-described Items [1] to [4],
   wherein a coloring agent is contained in at least one of the substrate protective layer and the substrate layer.
[6] The battery packaging material as recited in any one of the above-described Items [1] to [4],
   wherein the barrier layer and the substrate layer are laminated via an adhesive layer, and a coloring agent is contained in at least one of the substrate protective layer, the substrate layer, and the adhesive layer.
[7] The battery packaging material as recited in any one of the above-described Items [1] to [4],
   wherein a colored layer is arranged at least one of between the substrate protective layer and the substrate layer and between the substrate layer and the barrier layer.
[8] The battery packaging material as recited in any one of the above-described Items [1] to [4],
   wherein the barrier layer and the substrate layer are laminated via an adhesive layer, and
   wherein a colored layer is arranged at least one of between the substrate protective layer and the substrate layer, between the substrate layer and the adhesive layer, and between the adhesive layer and the barrier layer.

### Effects of the Invention

In the battery packaging material as recited in the above-described Item [1], since the substrate protective layer includes a binder resin and solid fine particles, the surface of the substrate protective layer includes a portion in which the binder resin is present and a portion in which the solid fine particles are present.

The portion in which the binder resin is present is easily brought into contact with an adhesive of a protective tape, and therefore, the adhesive strength of the portion is strong. The portion in which the solid fine particles are present is hard to be brought into contact with the adhesive, and therefore, the adhesive strength of the portion is weak.

The content rate of the binder resin is defined so as to fall within the range of 45 mass% to 70 mass%. Therefore, the area of the portion strong in the adhesive strength and the area of the portion weak in the adhesive strength are balanced, which enables easy peeling of the protective tape after use while keeping an adhesive strength when needed. Thus, glue residues after peeling are less likely to be generated.

The battery packaging material as recited in the above-described Item [2] is excellent in the adhesion suitability of the adhesive between the selected binder resin and the protective tape. Therefore, it is possible to differentiate the adhesive strength between the portion in which the binder resin is present and the portion in which the solid fine particles are present.

In the battery packaging material as recited in the above-described Item [3], the content rate of the solid fine particles in the substrate protective layer is 30 mass% to 55 mass%. Therefore, the content rate of the binder resin can be controlled so as to fall within an appropriate range.

In the battery packaging material as recited in the above-described Item [4], the solid fine particles having an average particle diameter of 5 um to 20 um are included at a rate of 1 mass% to 20 mass%, and the solid fine particles protrude outward without being buried in the binder resin to form a protrusion.

Therefore, it is possible to assuredly form the portion strong in the adhesive strength of the protective tape and the portion week in the adhesive strength of the protective tape on the surface of the substrate protective layer. This has a great effect to balance the adhesive strength required by the protective tape when needed and the easy peeling property of the protective tape after use.

Since the battery packaging material as recited in the above-described Items [5], [6], [7], and [8] is colored by the coloring agent, the light reflection by the barrier layer can be suppressed, thereby improving the visibility of the portion of the protective tape having adhesive residues. This improves the visibility of the adhesive residues of the protective tape and enables an easy determination of the adhesive residues. Further, the design properties can also be imparted.

### BRIEF DESCRIPTION OF THE DRAWINGS

FIG. 1 is a cross-sectional view showing one example of a battery packaging material according to the present invention.
FIG. 2 is a cross-sectional view showing another example of a battery packaging material according to the present invention.

### EMBODIMENTS FOR CARRYING OUT THE INVENTION

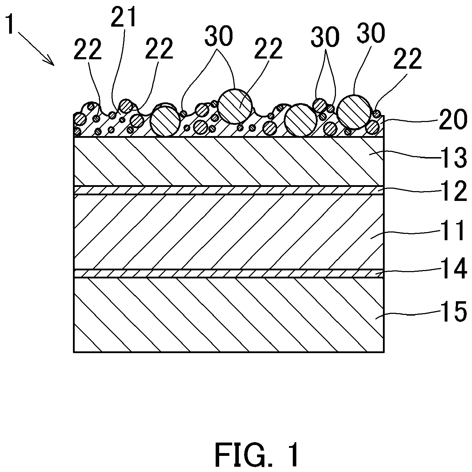

FIG. 1 shows one embodiment of a battery packaging material according to the present invention.

In the following description, a layer assigned by the same reference symbol represents the same or equivalent layer, and therefore, the duplicate description will be omitted.

### [Embodiment of Battery Packaging Material]

In the battery packaging material 1 shown in FIG. 1, a substrate layer 13 is bonded to one surface of a barrier layer 11 via a first adhesive layer 12, a heat-fusible resin layer 15 is bonded to the other surface of the barrier layer 11 via a second adhesive layer 14, and a substrate protective layer 20 is further laminated to the substrate layer 13.

A battery case is produced by arranging the battery packaging materials 1 with the heat-fusible resin layers 15 faced to each other and heat-sealing the peripheries of the battery packaging materials 1, and a bare cell is encapsulated in the battery case. In the battery case, the substrate protective layer 20 is arranged on the outer side, and the heat-fusible resin layer 15 is arranged on the inner side.

In the present specification, when describing the positions of the layers constituting the battery packaging material with directions, the direction toward the substrate protective layer is referred to as the outer side, and the direction toward the heat-fusible resin layer is referred to as the inner side in accordance with the directions of the inner and outer sides of the case.

The outer surface of the battery packaging material 1 requires that the applied protective tape be firmly attached without being unintentionally peeled off, but is required to have conflicting properties such that when the protective tape is not required, it does not leave the adhesive of the tape and can be peeled off cleanly without damaging the adhered surface.

### (Substrate Protective Layer)

The substrate protective layer 20 is a layer that imparts an excellent slipperiness to the surface of the battery packaging material to improve the formability and to impart excellent chemical resistance, solvent resistance, and abrasion resistance.

The substrate protective layer 20 is a cured film made of a resin composition including a binder resin 21 and solid fine particles 22. Some of the solid fine particles 22 in the cured film are buried in the binder resin 21, but some of them protrude outward from the surface of the binder resin 21 to form protrusions 30.

Therefore, on the surface of the substrate protective layer 20, not only ultrafine unevenness by the binder resin 21 but also large unevenness by the protrusions 30 are formed. That is, the surface of the substrate protective layer 20 includes a portion in which the binder resin 21 is present and a portion (protrusion 30) in which the solid fine particles 22 are present.

Since the protrusion 30 protrudes high on the surface of the substrate protective layer 20, the adhesive of a protective tape is brought into contact with the top portions of the protrusions 30 but is hardly brought into contact with the inclined portions around them.

On the other hand, since the portions other than the protrusions 30 are smoother than the protrusions 30, the adhesive is easily brought into contact thereto. The portion with which the adhesive is hard to be brought into contact is less in the contact amount of the adhesive, and therefore, the adhesive strength becomes weaker.

On the other hand, the portion with which the adhesive is easily brought into contact is more in the contact amount. Therefore, the adhesive strength becomes stronger. As described above, since a state is generated in which the portion in which the contact amount of the adhesive is large and the portion in which the contact amount of the adhesive is small on the surface of the substrate protective layer 20, it is possible to easily separate the protective film after use while keeping adhesive strength when needed, and glue residues are less likely to be generated after peeling.

On the surface of the substrate protective layer 20, the portion with which the adhesive is easily brought into contact is a portion where the binder resin 21 is present on the surface, and the portion with which the adhesive is hardly brought into contact is the protrusion 30 in which the solid fine particles 22 are present.

The area ratio of these portions varies depending on the content rate of the binder resin 21 in the substrate protective layer 20. Therefore, the proper balance between the adhesive strength of the protection tape when needed and the easy peeling property of the protection tape after use can be obtained by defining the content rate of the binder resin 21 on the surface of the substrate protective layer 20.

In the present invention, the content rate of the binder resin 21 in the substrate protective layer is set to 45 mass% to 70 mass%. The higher the content rate of the binder resin 21, the larger the area with which the adhesive is brought into contact becomes, and the stronger the adhesive strength of the protective tape becomes. To the contrary, the lower the content rate of the binder resin 21 becomes, the smaller the area with which the adhesive is brought into contact become, the lower the adhesive strength of the protective tape becomes.

If the content rate of the binder resin 21 is less than 45 mass%, the peeling of the protective tape can be easily performed after use, and glue residues are small, but the adhesive strength when needed becomes insufficient. On the other hand, when the content rate of the binder resin 21 exceeds 70 mass%, the protective tape can firmly adhere when needed, but since the peeling strength is higher, glue residues are likely to be generated when the protective tape was peeled off after use.

When the content rate of the binder resin 21 falls within the above-described range, the area of the portion strong in the adhesive force and the area of the portion weak in the adhesive strength are balanced. This makes it possible to easily peel the protective tape after use while keeping adhesive strength when needed, and adhesive residues after peeling are less likely to be generated. A particularly preferred content rate of the binder resin 21 is 50 mass% to 60 mass%.

Further, since the solid fine particles 22 are different in hardness from that of the binder resin 21, the surface of the substrate protective layer 20 includes portions different in hardness. The peeling easiness of the adhesive of the protective tape varies depending on the hardness of the bonding surface.

When the protective tape is peeled off from the substrate protective layer 20 having the above-described surface, the timing at which the adhesive is peeled off shifts at the portions different in the hardness. Therefore, it is considered that the force applied to the adhesive is dispersed, causing a cohesive fracture of the adhesive, which hardly causes adhesive residues.

As the binder resin 21, at least one type of a resin selected from the group consisting of an acryl-based resin, a urethane-based resin, a polyolefin-based resin, a phenoxy-based resin, and a polyester-based resin is preferably used. Since these resins are excellent in adhesion properties to the adhesive of the protective tape, the adhesive strength can be differentiated between the binder resin 21 and the protrusion 30.

Further, these resins have higher chemical resistance and solvent resistance, and therefore, the solid fine particles are less likely to fall off due to degradation of resin or the like. Among them, a urethane-based resin, a polyester urethane-based resin, and a urethane phenoxy-based resins are particularly preferable because they are flexible in a coating film and excellent in adhesive properties to the substrate layer (heat-resistant resin film).

Further, the binder resin may be composed of a main agent resin containing at least one of the above-described resins and a curing agent for curing the main agent resin. The curing agent is not particularly limited and may be appropriately selected depending on the main agent. The curing agent can be exemplified by an isocyanate compound, such as, e.g., hexamethylene diisocyanate (HDI), isophorone diisocyanate (IPDI), tolylene diisocyanate (TDI), diphenylmethane diisocyanate (MDI), xylylene diisocyanate (XDI), or a modified product of these isocyanate compounds.

The curing agent is preferably contained by 5 parts by mass to 30 parts by mass to 100 parts by mass of the main agent. When it is less than 5 parts by mass, the adhesiveness to the substrate layer 13 and the solvent resistance may deteriorate. When it exceeds 30 parts by mass, the substrate protective layer 20 may become hard, which may deteriorate the formability.

The type of the solid fine particles 22 is not limited, and may be either organic fine particles or inorganic fine particles. However, it is preferable to use both of them in combination. The organic fine particles and the inorganic fine particles are different in hardness and also different in hardness from the binder resin.

Therefore, when both of them are used in combination, the hardness of the surface of the substrate protective layer 20 becomes more variable, and the effect of dispersing the force applied to the adhesive is enhanced, and therefore, glue residues are less likely to be generated. The organic fine particles and the inorganic fine particles may be used in combination of two or more types of fine particles from each category.

The organic fine particles are exemplified by wax, such as, e.g., polyethylene wax, polypropylene wax, and polytetrafluoroethylene wax, and resin beads, such as, e.g., acrylic resin beads, urethane resin beads, polyethylene resin beads, polystyrene resin beads, silicone resin beads, and fluorine resin beads.

The wax gives slipperiness and forms a larger unevenness by the particle size. The resin beads exert a fine unevenness effect due to the particle diameter equal to or smaller than that of the wax, and prevent excess deformation of wax so that the wax does not excessively deform due to the sealing heat.

The inorganic fine particles are exemplified by silica, alumina, kaolin, calcium oxide, calcium carbonate, calcium sulfate, barium sulfate, and calcium silicate. The inorganic fine particles contribute to the adjustment of the glossiness (gloss value) of the coating film.

In a case where the coating film becomes too hard by adding a predetermined amount of one type of inorganic fine particles, since it is possible to compliment the flexibility of the coating film by adding another type of inorganic fine particles, it is preferable to use two or more types of inorganic fine particles in combination.

The average particle diameter of the solid fine particles is preferably from 5 um to 15 um. In a case where organic fine particles and inorganic fine particles are used as solid fine particles in combination, the average particle diameter of the inorganic fine particles is preferably smaller than that of the organic fine particles.

As for the wax, the average particle diameter of the organic fine particles is preferably from 5 um to 15 um. As for the resin beads, the average particle diameter is preferably from 1 um to 5 um. As for the inorganic fine particles, the average particle diameter is preferable from 0.5 um to 10 um, particularly from 1 um to 5 um.

The content rate of the solid fine particles 22 in the substrate protective layer 20 is preferably 30 mass% to 55 mass%. In this case, by optimizing the abundance of the sold fine particles on the surface of the substrate protective layer 20, it is possible to achieve the balance between the adhesive strength of the protective tape when needed and the easy peeling property of the protective tape after use. The particularly preferred content rate of the solid fine particles 22 is from 35 mass% to 50 mass%.

In a case where organic fine particles and inorganic fine particles are used in combination as the solid fine particles, the content rate of the wax of the organic fine particles is preferably in the range of 3 mass% to 15 mass%, the content rate of resin beads of the organic fine particles is preferably in the range of 10 mass% to 20 mass%, and the content rate of the inorganic fine particles is preferably in the range of 20 mass% to 35 mass%.

Note that the content rate of the solid fine particles rate is a ratio of the solid fine particles to the sum of the binder resin and the solid fine particles, not including the solvent used to adjust the viscosity at the time of coating.

Further, the solid fine particles 22 preferably contain solid fine particles having an average particle diameter of 5 um to 20 um at a rate of 1 mass% to 20 mass% in the substrate protective layer 20.

Since the solid fine particles having the above-described size protrude outward without being buried in the binder resin 21 to form the protrusions 30, it is possible to assuredly form a portion strong in the adhesive strength to the protective tape and a portion week in the adhesive strength to the protective tape on the surface of the substrate protective layer 20 by blending the solid fine particles 22 having the above-described size at a predetermined ratio. This has a great effect to optimize the balance between the adhesive strength to the protective tape when needed and the easy peeling property of the protective tape after use.

Further, in addition to the binder resin 21 and the solid fine particles 22, a lubricant and/or a surfactant may be added to the substrate protective layer 20. The lubricant and the surfactant are effective to lower the adhesive strength of the adhesion of the protective tape. When the lubricant and the surfactant are deposited on the surface of the substrate protective layer 20, the peeling property of the protective tape is improved, which hardly generates adhesive residues.

The lubricant can be exemplified by various amidos described below.

As saturated aliphatic amides, lauramide, palmitamide, stearamide, behenamide, and hydroxystearic acid amide can be exemplified.

As unsaturated fatty acid amides, oleamide and erucamide can be exemplified.

As substituted amides, N-oleylpalmitamide, N-stearyl stearamide, N-stearyl oleamide, N-oleyl stearamide, and N-stearyl erucamide can be exemplified.

As methylolamides, methylol stearamide can be exemplified.

As saturated fatty acid bisamides, methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenebisbehenic acid amide, hexamethylenehydroxystearic acid amide, N,N'-distearyladipine acid amide, N,N'-distearylsebacic acid amide can be exemplified.

As unsaturated fatty acid bisamides, ethylenebisoleic acid amide, ethylenebiserucic acid amide, hexamethylenebisoleic acid amide, N,N'-dioleyladipine acid amide, and N,N'-dioleylsebacic acid amide can be exemplified.

As fatty acid ester amides, stearamide ethyl stearate can be exemplified.

As aromatic bisamides, m-xylylene bisstearic acid amide, m-xylylene bishydroxystearic acid amide, and N,N'-cystearyl isophthalic acid amide can be exemplified.

As the surfactant, an anionic surfactant, a cationic surfactant, and a nonionic surfactant can be exemplified.

The preferred thickness of the substrate protective layer 20 is 1 um to 12 um, and the particularly preferred thickness is 2 um to 10 um.

The preferred materials of the layers other than the substrate protective layer 20 in the battery packaging material 1 are as follows.

### (Barrier Layer)

The barrier layer 11 is responsible for providing the battery packaging material 1 with a gas barrier property for preventing oxygen/water from entering. As the barrier layer 11, it is not particularly limited, but a metal foil, such as, e.g., an aluminum foil, a SUS foil (stainless-steel foil), a copper foil, a nickel foil, a titanium foil, and a clad foil can be exemplified.

As the barrier layer 11, an aluminum foil can be preferably used. In particular, an Al-Fe-based alloy foil containing Fe of 0.7 mass% to 1.7 mass% is preferable because it is excellent in the strength and the ductility and provides excellent formability.

The thickness of the barrier layer 11 is preferably 20 µm to 100 um. When the thickness is 20 µm or more, it is possible to prevent the generation of pinholes at the time of rolling when producing a metal foil, and when the thickness is 100 um or less, it is possible to reduce stress at the time of molding, such as, e.g., stretch forming and drawing, which in turn can improve the formability. The particularly preferred thickness of the barrier layer 11 is 30 um to 80 um.

Further, it is preferable that the barrier layer 11 is subjected to a base treatment, such as, e.g., a chemical conversion treatment, on at least a surface of the metal foil on the side of the heat-fusible resin layer 15. By being subjected to such a chemical conversion treatment, it is possible to sufficiently prevent the metal foil surface from being corroded due to the contents (such as, e.g., electrolytes of a battery).

### (Substrate layer)

As the substrate layer 13, a heat-resistant resin film that does not melt at the heat-sealing temperature at the time of heat-sealing the battery packaging material 1 is used. As the heat-resistant resin, a heat-resistant resin having a melting point higher than the melting point of the resin constituting the heat-fusible resin layer 15 by 10°C or more, preferably 20°C or more, is used. As the resin satisfying the above-described conditions, a polyamide film and a polyester film, such as, e.g., a nylon film, and the stretched film thereof are preferably used.

Among these, as the substrate layer 13, it is particularly preferred to use a biaxially stretched polyamide film, such as, e.g., a biaxially stretched nylon film, a biaxially stretched polybutylene terephthalate (PBT) film, a biaxially stretched polyethylene terephthalate (PET) film, or a biaxially stretched polyethylene naphthalate (PEN) film. As the nylon film, for example, a 6 nylon film, a 6,6 nylon film, and an MXD nylon film can be exemplified, but not particularly limited thereto. Note that the substrate layer 13 may be formed of a single layer, or may be formed of, for example, a multi-layer (a multi-layer formed of a PET film/a nylon film) formed of a polyester film/a polyamide film.

The thickness of the substrate layer 13 is preferably 9 um to 50 um, which makes it possible to secure sufficient strength as a packaging material and to reduce stresses at the time of forming, such as, e.g., stretch forming and drawing, to improve the formability. The more preferable thickness of the substrate layer 13 is 12 um to 30 um.

### (Heat-Fusible Resin Layer)

The heat-fusible resin layer 15 imparts excellent chemical resistance against an electrolyte having high corrosiveness and also has a role of imparting a heat-sealing property to the battery packaging material 1.

The resin constituting the heat-fusible resin layer 15 is preferably a polyolefin-based resin single-layer or a multi-layer film made of, e.g., a propylene-based resin, and is preferably a non-stretched film.

As the propylene-based resin, an ethylene-propylene copolymer containing ethylene and propylene as a copolymerization component can be exemplified. The ethylene-propylene copolymer may be either a random copolymer or a block-copolymer. As a multilayer ethylene-propylene copolymer film, a three-layer film of random copolymer-block copolymer-random copolymer can be recommended. The multilayer film can be produced by coextrusion or the like.

The thickness of the heat-fusible resin layer 15 is preferably 20 um to 100 um, and more preferably 30 um to 80 um. The ratio of the thickness of each layer of the three-layer films of the above-described random copolymer-block copolymer-random copolymer is preferably 1 to 3:4 to 8:1 to 3.

The heat-fusible resin layer 15 may contain a lubricant. The type of the lubricant is similar to that added to the substrate protective layer 20, and fatty acid amides are particularly preferred. Further, the lubricant content in the heat-fusible resin layer 15 is preferably 500 ppm to 3,000 ppm.

Generally, in the production process of the battery packaging material 1, all layers are laminated and then wound on a roll to be aged. The lubricant in the heat-fusible resin layer 15 is precipitated on the surface by aging and transferred to the substrate protective layer 20, which contributes to suppress the generation of glue residues of the protective tape.

### (First Adhesive Layer)

The first adhesive layer 12 is exemplified by, but not particularly limited to, an adhesive layer made of, e.g., a two-part curing type adhesive agent. As the two-part curing type adhesive agent, a two-part curing type adhesive agent composed of a first liquid (main agent) and a second liquid (curing agent) can be exemplified, wherein the first liquid is made of one or more types of polyols selected from the group consisting of a polyurethane-based polyol, a polyester-based polyol, a polyether-based polyol, and a polyester urethane-based polyol, and the second liquid is composed of isocyanate.

Among them, it is preferable to use a two-part curing type adhesive agent composed of a first liquid composed of one or two or more types of polyols selected from the group consisting of a polyester-based polyol and a polyester urethane-based polyol, and two liquids (curing agent) composed of isocyanate. The preferred thickness of the first adhesive layer 12 is 2 um to 5 um.

### (Second Adhesive Layer)

The second adhesive layer 14 is recommended to use, but not particularly limited thereto, an adhesive containing at least one type of a polyurethane-based resin, an acryl-based resin, an epoxy-based resin, a polyolefin-based resin, an elastomer-based resin, a fluorine-based resin, and an acid-modified polypropylene resin. Among them, an adhesive agent made of a polyurethane composite resin having acid-modified polyolefin as a main agent is preferable. The preferred thickness of the second adhesive layer 14 is 2 um to 5 µm.

Note that the first adhesive layer 12 and the second adhesive layer 14 are not essential layers, and the substrate layer 13 may be directly bonded to the barrier layer 11, and the heat-fusible resin layer 15 may be directly bonded to the barrier layer 11.

### (Coloring Agent)

By adding a coloring agent or newly providing a colored layer to the above-described existing layers, the battery packaging material can conceal the metallic color of the barrier layer and color the barrier layer to a desired color, thereby imparting a design property to the packaging material. Further, the light reflection from the barrier layer can be suppressed, which makes it possible to easily find the residues of the adhesive of the protective tape.

In the case of coloring the pre-existing layer, a coloring agent is added to at least one of the substrate protective layer, the substrate layer, and the first adhesive layer. Note that in the battery packaging material not having a first adhesive layer, a coloring agent is added to the substrate protective layer and/or the substrate layer.

The coloring agent may be either a pigment or a dye, and may be one type of a coloring agent or may be a combination of two or more types of coloring agents. Specific examples of the coloring agent include carbon black, calcium carbonate, titanium oxide, zinc oxide, iron oxide, aluminum powder, an azo-based pigment, and a phthalocyanine-based pigment. The coloring agent concentration in each layer is preferably 0.5 mass% or more and less than 5 mass%.

In the case of newly providing a colored layer, the colored layer is provided between at least between the substrate protective layer and the substrate layer, between the substrate layer and the first adhesive layer, and between the first adhesive layer and the barrier layer.

Note that in the battery packaging material not having a first adhesive layer, a colored layer is provided between the substrate protective layer and the substrate layer and/or between the substrate layer and the barrier layer. The thickness of the colored layer is preferably 1 um to 10 um. The colored layer is preferably made of a colored resin composition in which the above-described coloring agent is added to a base-resin made of a main agent, such as, e.g., diamine and polyol, and a curing agent. Further, the concentration of the coloring agent of the colored resin composition is preferable 5 mass% or more and 50 mass% or less.

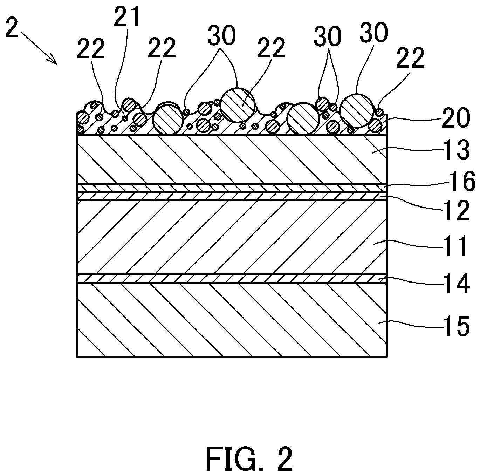

The battery packaging material 2 shown in FIG. 2 is provided with a colored layer 16 between the substrate layer 13 and the first adhesive layer 12.

### EXAMPLES

Battery packaging materials 2 each having the structure shown in FIG. 2 were prepared as Examples and Comparative Examples. The materials common to each example are as follows.

### (Common Material)

As the barrier layer 11, a layer was used in which a chemical conversion treatment solution composed of phosphoric acid, polyacrylic acid (acryl-based resin), chromium (III) salt compound, water, and alcohol was applied to both surfaces of an aluminum foil made of A8021-O having a thickness of 40 um, and then dried at 180 °C to thereby form a chemical conversion coating film. The chromium adhesion amount of this chemical conversion coating film was 10 mg/m2 per one side.

As the substrate layer 13, a biaxially stretched 6-nylon film having a thickness of 15 um was used.

As the colored layer 16, a black colored layer having a thickness of 3 um was formed on one side of the substrate layer 13 by applying a colored resin composition containing carbon black, diamine, a polyester-based polyol, and a curing agent and allowing it to stand at 40 °C for one day to proceed the crosslinking with drying. That is, the colored layer 16 and the substrate layer 13 were integrated into a two-layer film, and the two-layer film was bonded to another layer.

As the heat-fusible resin layer 15, a non-stretched polypropylene film having a thickness of 30 um containing 3,000 ppm of erucamide as a lubricant was used.

As the first adhesive layer 12, a two-part curing type urethane-based adhesive agent was used.

As the second adhesive layer 14, a two-part curing type maleic acid-modified propylene adhesive agent was used.

As a solvent to be added to the resin composition of the substrate protective layer 20, a mixture of 50 parts by mass of methyl ethyl ketone and 50 parts by mass of toluene were used.

### (Example 1)

A resin composition and a coating composition for forming the substrate protective layer 20 were prepared by the following method.

A polyester polyol resin was used as a main agent resin, and an adduct ("A" in Table 1) of trimethylolpropane and hexamethylene diisocyanate (HDI) was used as a main agent resin, and 10 parts by mass of the curing agent was blended with 48 by parts by mass of the adduct to obtain a binder resin.

As the solid fine particles, polytetrafluoroethylene wax having an average particle diameter of 15 um and polyethylene resin beads having an average particle diameter of 3 um were used as organic fine particles. As the inorganic fine particles, silica having an average particle of 2 um and barium sulfate having an average particle diameter of 1 um were used.

The above-described four types of solid fine particles were blended with the binder resin at the content rate shown in Table 1 to obtain a resin composition, and 50 parts by mass of the resin composition and 100 parts by mass of the solvent were mixed to prepare a coating composition. The content rate of the binder resin in the resin composition and the sum content rate of the solid fine particles were as shown in Table 1.

Then, a first adhesive layer 12 having a thickness of 3 um was formed on one surface of the barrier layer 11, and the surface of the colored layer 16 of the substrate layer 13 (two-layer film) with a colored layer 16 was overlaid via the first adhesive layer 12 and dry-laminated.

Next, a second adhesive layer 14 having a thickness of 3 um was formed on the other surface of the barrier layer 11, and a heat-fusible resin layer 15 was laminated via the second adhesive layer 14. They were sandwiched between a rubber nip roll and a laminate roll heated to 100 °C and then dry-laminated by crimping.

This resulted in a six-layer film in which the substrate layer 13, the colored layer 16, the first adhesive layer 12, the barrier layer 11, the second adhesive layer 14, and the heat-fusible resin layer 15 were laminated in order from the outside to the inside.

Next, a coating composition for the substrate protective layer 20 was applied to the surface of the six-layer substrate layer 13, dried, wound on a roll, and aged at 40 °C for 10 hours. The thickness of the substrate protective layer 20 after aging was 2.5 um, and a seven-layer battery packaging material 2 was obtained.

### (Example 2)

A resin composition and a coating composition for forming the substrate protective layer 20 were prepared by the following method.

A binder resin was prepared by blending the same main agent resin and curing agent as those in Example 1 at the ratio of 11 parts by mass of the curing agent to 54 parts by mass of the main agent resin.

As the solid fine particles, olytetrafluoroethylene wax having an average particle diameter of 10 um and polyethylene resin beads having an average particle diameter of 5 um was used as the organic fine particles, and silica having an average particle diameter of 2 um and barium sulfate having an average particle diameter off 1 um was used as inorganic fine particles.

Four types of solid fine particles were blended with the binder resin at the content rate shown in Table 1 to prepare a resin composition, and 45 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 2 um.

### (Example 3)

A resin composition and a coating composition for forming the substrate protective layer 20 were prepared by the following method.

A binder resin was prepared by using an acrylic polyol as a main agent resin and the same curing agent as in Example 1 and blending 13 parts by mass of the curing agent with 57 parts by mass of the main agent resin.

As the solid fine particles, polytetrafluoroethylene wax having an average particle diameter of 8 um and acrylic resin beads having an average particle diameter of 7 um were used as organic fine particles, and alumina having an average particle diameter of 1 um and barium sulfate having an average particle diameter of 1 um were used as inorganic fine particles.

Four types of solid fine particles were blended with the binder resin at the content rate shown in Table 1 to prepare a resin composition, and 45 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 1.8 um.

### (Example 4)

A resin composition and a coating composition for forming the substrate protective layer 20 were prepared by the following method.

Using the same main agent resin and curing agent as those in Example 3, 9 parts by mass of the curing agent was blended with 41 parts by mass of the main agent resin to obtain a binder resin.

As the solid fine particles, polytetrafluoroethylene wax having an average particle diameter of 20 um, and acrylic resin beads having an average particle diameter of 2 um was used as organic fine particles, and silica having an average particle diameter of 2 um and barium sulfate having an average particle diameter of 1 um were used as inorganic fine particles.

Four types of solid fine particles were blended with the binder resin at the content rate shown in Table 1 to prepare a resin composition, and 40 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 3 um.

### (Example 5)

A resin composition and a coating composition for forming the substrate protective layer 20 were prepared by the following method.

A binder resin was prepared by using the same main agent resin and curing agent as those in Example 1 and blending 8 parts by mass of the curing agent with 37 parts by mass of the main agent resin.

As the solid fine particles, polyethylene wax having an average particle diameter of 10 um and polyethylene resin beads having an average particle diameter of 10 um were used as organic fine particles, and alumina having an average particle diameter of 1 um and calcium carbonate having an average particle diameter of 3 um were used as inorganic fine particles.

A coating composition was prepared by blending four types of solid fine particles with the above-described binder resin at the content rate shown in Table 1 to prepare a resin composition, and by mixing 45 parts by mass of the resin composition and 100 parts by mass of a solvent. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 1.8 um.

### (Example 6)

A resin composition and a coating composition for forming the substrate protective layer 20 were prepared by the following method.

A binder resin was prepared by using a polyurethane polyol resin as a main agent resin, and an equivalent mixture ("B" in Table 1) of an adduct of trimethylolpropane and hexamethylene diisocyanate (HDI) and an adduct of trimethylolpropane and tolylene diisocyanate (TDI) as a curing agent, and 9 parts by mass of the curing agent was blended with 45 parts by mass of the main agent resin.

As the solid fine particles, polyethylene wax having an average particle diameter of 12 um and polyethylene resin beads having an average particle diameter of 10 um were used as organic fine particles, and silica having an average particle diameter of 3 um and calcium silicate having an average particle diameter of 2 um were used as inorganic fine particles.

Four types of the solid fine particles were blended with the binder resin at the content rate shown in Table 1 to prepare a resin composition, and 50 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 2 um.

### (Example 7)

A resin composition and a coating composition for forming the substrate protective layer 20 were prepared by the following method.

A binder resin was prepared by using the same main agent resin and curing agent as those in Example 6 and blending 9 parts by mass of the curing agent with 43 parts by mass of the main agent resin.

As the solid fine particles, polyethylene wax having an average particle diameter of 6 um and polyethylene resin beads having an average particle diameter of 5 um were used as organic fine particles, and, silica having an average particle diameter of 1 um and barium sulfate having an average particle diameter of 1 um were used as inorganic fine particles.

Four types of solid fine particles were blended with the binder resin at the content rate shown in Table 1 to prepare resin composition, and 40 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 1.3 um.

### (Example 8)

A resin composition and a coating composition for forming the substrate protective layer 20 were prepared by the following method.

The same main agent resin and curing agent as those in Example 6 were used, and 8 parts by mass of the curing agent was blended with 40 parts by mass of the main agent resin to prepare a binder resin.

As the solid fine particles, polyethylene wax having an average particle diameter of 12 um and polyethylene resin beads having an average particle diameter of 6 um were used as organic fine particles, and alumina having an average particle diameter of 4 um and calcium oxide having an average particle diameter of 2 um were used as inorganic fine particles.

Four types of solid fine particles were blended with a binder resin at the content rate shown in Table 1 to prepare a resin composition, and 45 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 2 um.

### (Example 9)

A resin composition and a coating composition for forming the substrate protective layer 20 were prepared by the following method.

The same main agent resin and curing agent as those in Example 2 were used, and 11 parts by mass of the curing agent was blended with 54 parts by mass of the main agent resin to prepare a binder resin.

As the solid fine particles, polyethylene wax having an average particle diameter of 12 um and polyethylene resin beads having an average particle diameter of 10 um were used as organic fine particles, and silica having an average particle diameter of 2 um was used as inorganic fine particles.

Three types of solid fine particles were blended with the binder resin at the content rate shown in Table 1 to prepare a resin composition, and 45 parts by mass the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for forming the substrate protective layer 20. The thickness of the substrate protective layer 20 after aging was 2 um.

### (Comparative Example 1)

A resin composition and a coating composition for forming the substrate protective layer 20 were prepared by the following method.

The same main agent resin and curing agent as those in Example 1 were used, and 13 parts by mass of the curing agent was blended with 62 parts by mass of the main agent resin to prepare a binder resin.

As the solid fine particles, polytetrafluoroethylene wax having an average particle diameter of 5 um and acrylic resin beads having an average particle diameter of 5 um was used as organic fine particles, and silica having an average particle diameter of 2 um and barium sulfate having an average particle diameter of 1 um were used as inorganic fine particles.

Four types of solid fine particles were blended with the binder resin at the content rate shown in Table 1 to prepare a resin composition, and 45 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for forming the substrate protective layer 20. The thickness of the substrate protective layer 20 after aging was 1.8 um.

### (Comparative Example 2)

A resin composition and a coating composition for forming the substrate protective layer 20 were prepared by the following method.

The same main agent resin and curing agent as those in Example 3 were used, and 7 parts by mass of the curing agent was blended with 33 parts by mass of the main agent resin to prepare a binder resin.

As the solid fine particles, polyethylene wax having an average particle diameter of 20 um and polyethylene resin beads having an average particle diameter of 5 um were used as organic fine particles, and alumina having an average particle diameter of 1 um and a barium sulfate having an average particle diameter of 1 um were used as inorganic fine particles.

Four types of solid fine particles were blended with the binder resin at the content rate shown in Table 1 to prepare a resin composition, and 50 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging is 2 um.

The prepared battery packaging materials 2 were measured and evaluated for the following items. The results are shown in Table 1.

### (Comparative Example 3)

A resin composition and a coating composition for forming the substrate protective layer 20 were prepared by the following method.

The same main agent resin and curing agent as those in Example 1 were used, and 13 parts by mass of the curing agent was blended with 62 parts by mass of the main agent resin to prepare a binder resin.

As the solid fine particles, polyethylene wax having average particle diameter of 4 um and acrylic resin beads having an average particle diameter of 3 um were used as organic fine particles, and silica having an average particle diameter of 2 um and barium sulfate having an average particle diameter of 1 um were used as inorganic fine particles.

Four types of solid fine particles were blended at the content rate shown in Table 1 to prepare a resin composition, and 45 parts by mass of the resin composition and 100 parts by mass of the solvent were mixed to prepare a coating composition. The content rate of the binder resin in the resin composition and the sum content rate of the solid fine particles were as shown in Table 1.

A seven-layer battery packaging material 2 was prepared in the same manner as in Example 1 except for the resin composition and the coating composition for the substrate protective layer 20. The thickness of the substrate protective layer 20 after aging was 2 um.

The prepared battery packaging materials 2 were measured and evaluated for the following items. The results are shown in Table 1.

### (Formability)

The produced battery packaging material 2 was subjected to deep-drawing of a rectangular parallelepiped shape having a vertical 55 mm and a horizontal 35 mm and a depth 4.5 mm using a forming machine (part number: TP-25C-XZ) manufactured by Amada Co., Ltd, and the formability was evaluated based on the following criteria.
⊚: No pinhole and no cracks occurred.
○: Pinhole and cracking did not occur, but very slight discoloration was observed in the substrate protective layer.
△: No pinhole or cracking occurred, but slight discoloration was observed in the substrate protective layer.
×: Pinhole or cracking occurred.

It should be noted that △ and above are the qualities that can be used as a battery packaging material.

### (Tape Adhesive Properties)

A test piece with a width 15 mm × a length 150 mm was cut out from the battery packaging material 2. An adhesive tape (tesa 70415) having a width of 5 mm and a length of 80 mm and having an adhesive force of 13 N/cm was adhered to the substrate protective layer 20 of the test piece along the longitudinal direction of the test piece. Then, a hand roll having a weight 2 kgf was moved back and forth five times on the adhesive tape, and then allowed to stand at a normal temperature for one hour.

Next, using a tensile test machine, a strograph (AGS-5kNX) manufactured by Shimadzu Corporation was used, and an end of the test piece was pinched and fixed by one of chucks, and an end portion of the adhesive tape was grasped by the other chuck. In accordance with JIS K6854-3(1999), the peel strength was measured when the tape was peeled off at 108 degrees at the peeling rate of 300 mm/min, and the value at which the measured value was stabilized was defined as the adhesive force (unit: N/mm) between the test piece and the adhesive tape.

The adhesive force between the test piece and the adhesive tape was evaluated according to the following criteria.
⊚: 7 N/5mm or more, and the adhesive property is very high
○: 5 N/5mm or more and less than 7 N/5mm, and the adhesive property is high
X : Less than 5 N/5mm, and the adhesive property is low

Note that ○ or more is considered to be acceptable.

### (Glue Residues)

A test piece with a width 50 mm× a length 100 mm was cut out from the battery packaging material 2. An adhesive tape (Nitto Denko V420) having a width 40 mm and a length 60 mm and having an adhesive strength of 0.1 N/cm was adhered to the substrate protective layer 20 of the test piece along the longitudinal direction of the test piece. Then, a hand roll having a weight 2 kgf was made to travel five times back and forth on the adhesive tape.

Then, the test piece to which the adhesive tape was adhered was heat-pressed for 3 hours under the condition of 80 °C and 0.5 MPa.

Then, the adhesive tape was quickly peeled off from the test piece after the series of treatments, and the peeled surface was observed and evaluated according to the following criteria.
⊚: No change in the surface status as compared with the pre-adhering
○: There was a piece of adhesive that could be removed by wiping it lightly.
△: It could be removed by wiping, but some pieces of adhesive larger than ○ remained
×: Adhesive that could not be removed by wiping remained firmly.

Noted that ○ or more are considered to be acceptable.

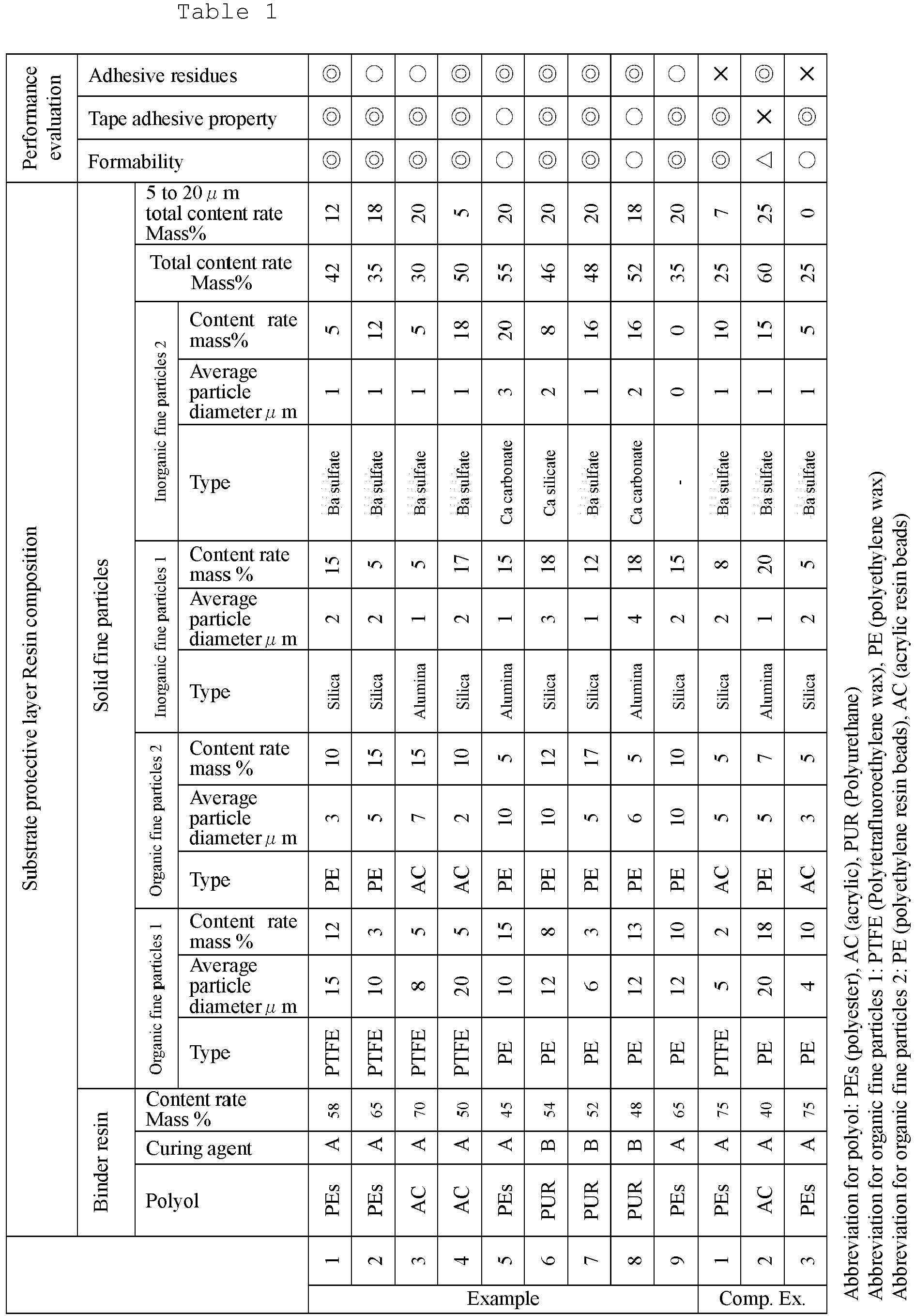

From Tables 1, it was confirmed that by specifying the content rate of the binder resin of the substrate protective layer, the adhesive properties of the protective tape are good and the adhesive residues at the time of separation can be suppressed.

### Industrial Applicability

The battery packaging material according to the present invention can be suitably used as a packaging material for a power storage device, such as, e.g., a battery or a capacitor used for a mobile device exemplified by a smartphone and a tablet computer, and a battery or a capacitor used for an electric vehicle, wind power generation, solar power generation, or storing night power.

### Description of Symbols

- 1, 2:: Battery packaging material
- 11:: Barrier layer
- 12:: First adhesive layer
- 13:: Substrate layer
- 14:: Secondary adhesive layer
- 15:: Heat-fusible resin layer
- 16:: Colored layer
- 20:: Substrate protective layer
- 21:: Binder resin
- 22:: Solid fine particles
- 30:: Protrusion

## Claims

1. A battery packaging material comprising:
a substrate layer;
a heat-fusible resin layer;
a barrier layer arranged between the substrate layer and the heat-fusible resin layer; and
a substrate protective layer arranged as an outermost layer on an outer side of the substrate layer,
wherein the substrate protective layer includes a binder resin and solid fine particles, and
wherein a content rate of the binder resin in the substrate protective layer is 45 mass% to 70 mass%.

2. The battery packaging material as recited in claim 1,
wherein the binder resin is at least one type of a resin selected from the group consisting of an acryl-based resin, a urethane-based resin, a polyolefin-based resin, a phenoxy-based resin, and a polyester-based resin.

3. The battery packaging material as recited in claim 1 or 2,
wherein the solid fine particles are composed of inorganic fine particles and organic fine particles, and a content rate of the solid fine particles in the substrate protective layer is 30 mass% to 55 mass%.

4. The battery packaging material as recited in claim 3,
wherein a content rate of the solid fine particles having an average particle diameter of 5 um to 20 um in the substrate protective layer is 1 mass% to 20 mass%.

5. The battery packaging material as recited in any one of claims 1 to 4,
wherein a coloring agent is contained in at least one of the substrate protective layer and the substrate layer.

6. The battery packaging material as recited in any one of claims 1 to 4,
wherein the barrier layer and the substrate layer are laminated via an adhesive layer, and a coloring agent is contained in at least one of the substrate protective layer, the substrate layer, and the adhesive layer.

7. The battery packaging material as recited in any one of claims 1 to 4,
wherein a colored layer is arranged at least one of between the substrate protective layer and the substrate layer and between the substrate layer and the barrier layer.

8. The battery packaging material as recited in any one of claims 1 to 4,
wherein the barrier layer and the substrate layer are laminated via an adhesive layer, and
wherein a colored layer is arranged at least one of between the substrate protective layer and the substrate layer, between the substrate layer and the adhesive layer, and between the adhesive layer and the barrier layer.
